# EUROPÄISCHE PATENTSCHRIFT

(11) **EP 3 807 702 B1**
(45) Veröffentlichungstag und Bekanntmachung des Hinweises auf die Patenterteilung: **13.09.2023**
(21) Anmeldenummer: 19731674.8
(22) Anmeldetag: 13.06.2019
(51) Int. Cl.: G02B 6/10, F21V 8/00, G02B 27/01

(54) **GERÄT ZUM GENERIEREN EINES VIRTUELLEN BILDES MIT STÖRLICHTUNTERDRÜCKUNG**
APPARATUS FOR GENERATING A VIRTUAL IMAGE WITH INTERFERENCE LIGHT SUPPRESSION
APPAREIL POUR LA GÉNÉRATION D'UNE IMAGE VIRTUELLE COMPRENANT UNE CORRECTION DES REFLETS

(30) Priorität: 15.06.2018 DE 102018209619; 05.07.2018 DE 102018211073
(43) Veröffentlichungstag der Anmeldung: 21.04.2021
(73) Patentinhaber: Continental Automotive Technologies GmbH, 30165 Hannover (DE)
(72) Erfinder: VON SPIEGEL, Wolff, 65824 Schwalbach a. Ts. (DE); POLZ, Mathias, 65824 Schwalbach a. Ts. (DE)
(74) Vertreter: Continental Corporation
(86) Internationale Anmeldenummer: PCT/EP2019/065551
(87) Internationale Veröffentlichungsnummer: WO 2019/238849

(56) Entgegenhaltungen:
- DE-A1-102016 115 938
- DE-A1-102017 109 051
- US-A1- 2011 279 679
- US-A1- 2016 139 416

## Beschreibung

Die vorliegende Erfindung betrifft ein Gerät zum Generieren eines virtuellen Bildes.

Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes.

Der Betrachter kann das virtuelle Bild nur aus der Position der sogenannten Eyebox betrachten. Als Eyebox wird ein Bereich bezeichnet, dessen Höhe und Breite einem theoretischen Sichtfenster entspricht. So lange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Je größer die Eyebox ist, desto weniger eingeschränkt ist der Betrachter somit bei der Wahl seiner Sitzposition.

Die Größe der Eyebox herkömmlicher Head-Up-Displays wird durch die Größe der Optikeinheit begrenzt. Ein Ansatz zur Vergrößerung der Eyebox besteht darin, das von der bildgebenden Einheit kommende Licht in einen Lichtwellenleiter einzukoppeln. Das in den Lichtwellenleiter eingekoppelte Licht wird an dessen Grenzflächen totalreflektiert und wird somit innerhalb des Lichtwellenleiters geleitet. Zusätzlich wird an einer Vielzahl von Positionen entlang der Ausbreitungsrichtung jeweils ein Teil des Lichts ausgekoppelt. Durch den Lichtwellenleiter erfolgt auf diese Weise eine Aufweitung der Austrittspupille. Die effektive Austrittspupille setzt sich hier aus Bildern der Apertur des Bilderzeugungssystems zusammen.

Vor diesem Hintergrund beschreibt die US 2016/0124223 A1 eine Anzeigevorrichtung für virtuelle Bilder. Die Anzeigevorrichtung umfasst einen Lichtwellenleiter, der bewirkt, dass von einer bildgebenden Einheit kommendes Licht, das durch eine erste Lichteinfallsfläche einfällt, wiederholt einer internen Reflexion unterzogen wird, um sich in einer ersten Richtung von der ersten Lichteinfallsfläche weg zu bewegen. Der Lichtwellenleiter bewirkt zudem, dass ein Teil des im Lichtwellenleiter geführten Lichts durch Bereiche einer ersten Lichtaustrittsfläche, die sich in der ersten Richtung erstreckt, nach außen austritt. Die Anzeigevorrichtung umfasst weiterhin ein erstes lichteinfallseitiges Beugungsgitter, das auftreffendes Licht beugt, um zu bewirken, dass das gebeugte Licht in den Lichtwellenleiter eintritt, und ein erstes lichtausfallendes Beugungsgitter, das vom Lichtwellenleiter einfallendes Licht beugt.

Bei der aktuell bekannten Auslegung eines derartigen Geräts, bei dem der Lichtwellenleiter aus Glasplatten besteht, innerhalb derer Beugungsgitter oder Hologramme angeordnet sind, tritt ein Problem auf, falls von außen Licht einfällt. Durch Reflexionen des von außen einfallenden Lichts kann Störlicht in das Auge des Benutzers fallen. Zudem wird der Kontrast des vom Benutzer wahrgenommenen virtuellen Bildes reduziert.

Bei herkömmlichen Geräten werden deshalb möglicherweise reflektierende Komponenten verkippt und mit Strahlfallen kombiniert, sodass Reflexe den Bereich, in dem das Fahrerauge erwartet wird, nicht erreichen. Alternativ werden Antireflexbeschichtungen verwendet und Strukturrauigkeiten genutzt, um die Reflexintensität zu vermindern.

Das Verkippen der Komponenten kostet erheblich Bauraum, der in Automobilen begrenzt ist. Außerdem ist die Performance der Komponenten bei verkipptem Einbau in der Regel gemindert. Schichten und Strukturen verringern die erreichbare Intensität, die Reflexe bleiben in der Regel aber deutlich sichtbar und verringern den Kontrast erheblich. Weiterer Stand der Technik ist offebart in US 2016/139416 A1 und DE 10 2017 109051 A1.

Es ist eine Aufgabe der vorliegenden Erfindung, ein verbessertes Gerät zum Generieren eines virtuellen Bildes vorzuschlagen, bei dem der Einfluss von Störlicht reduziert ist.

Diese Aufgabe wird durch ein Gerät mit den Merkmalen des Anspruchs 1 gelöst. Bevorzugte Ausgestaltungen der Erfindung sind Gegenstand der abhängigen Ansprüche.

Gemäß der Erfindung weist ein Gerät zum Generieren eines virtuellen Bildes die in Anspruch 1 genannten Merkmale auf.

Da jede Glasoberfläche, oder allgemein jede dielektrische Oberfläche einer optischen Komponente eines Geräts zum Generieren eines Bildes Lichtreflexionen hervorrufen kann, die in das Auge des Nutzers gelangen, weist das erfindungsgemäße Gerät ein Blendschutzelement auf. Ein Blendschutzelement vermeidet solche Lichtreflexionen, indem es von außen einfallendes Licht in einer Lichtfalle konzentriert anstatt es in Richtung des Auges des Nutzers zu reflektieren. Der darzustellende Inhalt wird durch eine zeitsequentiell pulsierende Ansteuerung der Lichtquelle nur zu bestimmten Zeitabschnitten generiert. Angepasst an diese Zeitabschnitte wird das als Verschluss ausgebildete Blendschutzelement durchlässig, sodass das generierte Bild das Auge des Betrachters erreichen kann. Ansonsten bleibt das Blendschutzelement undurchlässig. Dadurch werden störende Lichtreflexe vermindert, die auf Spiegelungen des das Blendschutzelement passierenden Lichts an dielektrischen Flächen beruhen, die dem Blendschutzelement nachgeordnet sind.

Durch die erfindungsgemäße Lösung wird eine Unterdrückung sichtbarer Reflexe durch äußeres Störlicht ermöglicht. Dadurch wird zugleich der Kontrast des virtuellen Bildes verbessert. Zudem ergibt sich eine erhöhte Flexibilität bezüglich der räumlichen Anordnung der optischen Komponenten, da keine spezielle Verkippung zur Minderung von Störreflexen erforderlich ist. Der erforderliche Bauraum kann somit vorteilhafterweise gegenüber anderen Bauformen verringert werden. Auch die thermische Belastung der Komponenten ist reduziert, beispielsweise durch den Wegfall von Lichtfallen oder die geringere Menge an von außen einfallendem Licht, welches im Inneren des Geräts absorbiert wird.

Gemäß einem Aspekt der Erfindung weist das Gerät einen Lichtwellenleiter zum Aufweiten einer Austrittspupille auf. Durch die Verwendung eines Lichtwellenleiters zum Aufweiten einer Austrittspupille lässt sich eine besonders große Eyebox erzielen. Allerdings wirkt sich bei einem derart gestalteten Gerät einfallendes Licht recht störend aus, sodass eine Unterdrückung von Störlicht mittels der erfindungsgemäßen Lösung vorteilhaft ist.

Das Blendschutzelement ist vorteilhafterweise eingerichtet, den Einfall von Störlicht auf den Lichtwellenleiter zu reduzieren. Das Blendschutzelement ist genau dann durchlässig, wenn zur Erzeugung des virtuellen Bildes benötigtes Licht das Blendschutzelement erreicht und dieses passiert. Von außen einfallendes Sonnenlicht kann das Blendschutzelement nur dann passieren, wenn dieses durchlässig geschaltet ist.

Gemäß der Erfindung ist der Verschluss steuerbar, wobei die Ansteuerung des Verschlusses synchron mit der Ansteuerung der zumindest einen Lichtquelle erfolgt. Die zumindest eine Lichtquelle liefert nur dann Licht, wenn der Verschluss offen ist, bzw. der Verschluss ist nur dann offen, wenn die zumindest eine Lichtquelle Licht liefert. Die Öffnungszeit des Verschlusses wird vorzugsweise kurz gehalten, z.B. im Bereich weniger Millisekunden, sodass störende Reflexionen das Blendschutzelement nur während einer kurzen Zeit passieren können. Dazu ist die Lichtquelle, die zur Erzeugung des virtuellen Bildes genutzt wird, mit dem Verschluss synchronisiert. Die Reduzierung der störenden Lichtreflexionen hängt von der Öffnungszeit des Verschlusses ab. Je kürzer die Öffnungszeit anteilig ist, desto größer ist die Reduzierung. Bei besonders kurzen Öffnungszeiten des Verschlusses, bei denen die Laufzeit des Lichts eine Rolle spielt, erfolgt die Synchronisation so, dass das von der Lichtquelle kommende Licht dann den Verschluss erreicht, wenn dieser geöffnet ist. Dies kann bedeuten, dass die Lichtquelle einen Lichtpuls abgibt, bevor der Verschluss öffnet.

Um trotz des pulsierenden Betriebs eine konstante Helligkeit des virtuellen Bildes zu erreichen, ist die Leistung der Lichtquelle vorzugsweise umso stärker, je kürzer die Zeitabschnitte sind, in der die Lichtquelle angesteuert wird. Dies lässt sich vorteilhaft mittels gepulster Laser erzielen.

Gemäß einem Aspekt der Erfindung wird der Verschluss derart angesteuert, dass Störlicht, das in das Gerät eintritt, während sich der Verschluss in einem geöffneten Zustand befindet, nach einer Reflexion im Gerät zu einem Zeitpunkt auf den Verschluss trifft, zu dem sich der Verschluss in einem geschlossenen Zustand befindet. Wenn die Öffnungszeit des Verschlusses besonders kurz ist besteht eine hohe Wahrscheinlichkeit, dass von außen einfallendes Licht, das den Verschluss während dessen Öffnungszeit passiert hat, nach Reflexion an einem nachfolgenden Element den Verschluss erst dann wieder erreicht, wenn dieser bereits wieder verschlossen ist. Somit werden störende Lichtreflexe weiter reduziert.

Gemäß einem Aspekt der Erfindung weist das Blendschutzelement eine schaltbare Flüssigkristallschicht, eine Kerr-Zelle oder eine Pockels-Zelle auf. Gemäß einer Ausführungsform beruht das erfindungsgemäße Blendschutzelement auf einer schaltbaren Flüssigkristallschicht in Verbindung mit gekreuzten Polarisatoren. Die Ansteuerung des Flüssigkristalls erfolgt über optisch durchlässige Kontaktflächen, die die gesamte obere und untere Fläche des Flüssigkristalls bedecken. Es handelt sich somit um ein einziges aktives Element. Der gesamte Flüssigkristall wird daher auf einen Schlag geschaltet. Die Kontaktflächen bestehen aus einem dem Fachmann bekannten Material, beispielsweise aus ITO (ITO: Indium tin oxide, Indiumzinnoxid). Sie sind vorzugsweise aufgedampft bzw. aufgesputtert. Die Verwendung einer schaltbaren Flüssigkristallschicht hat den Vorteil, dass sie besonders kostengünstig realisiert werden kann. Aufgrund der verhältnismäßig langen Schaltzeiten ist diese Lösung insbesondere für eher niedrige Bildwiederholraten geeignet.

Gemäß weiterer Ausführungsformen nutzt das erfindungsgemäße Blendschutzelement eine Kerr-Zelle oder eine Pockels-Zelle. Durch die Verwendung von Kerr-Zellen oder Pockels-Zellen in Verbindung mit gekreuzten Polarisatoren können deutlich kleinere Schaltzeiten erzielt werden, wodurch sich diese Lösungen auch für große Bildwiederholraten geeignet sind.

Gemäß nicht benaspruchter alternativer Ausführungsformen ist der Verschluss als in Sättigung gehender Absorber ausgebildet. Beispielsweise kann der in Sättigung gehende Absorber ein dotierter Kristall sein. Bei dieser Lösung wird ein passiver Verschluss verwendet, wodurch sich eine Ansteuerung des Verschlusses erübrigt. Das stark konzentrierte, von der Lichtquelle kommende Licht lässt den Absorber in Sättigung gehen und passiert ihn daher zum größten Teil oder nahezu vollständig. Von außen kommendes Störlicht, beispielsweise von Scheinwerfern anderer Fahrzeuge, von der Straßenbeleuchtung oder auch von der Sonne, ist nicht konzentriert genug um den Absorber in Sättigung zu bringen. Es wird daher von diesem vollständig oder zumindest zum größten Teil absorbiert und gelangt somit nicht in das Auge des Nutzers. Es kann den Absorber nur dann passieren, wenn dieser durch das konzentrierte Licht der Lichtquelle in Sättigung gebracht und somit geöffnet ist. Da dies nur in relativ kurzen Zeitabschnitten der Fall ist, wird ein Großteil des einfallenden Störlichts unterdrückt.

Gemäß nicht benaspruchter alternativer Ausführungsformen gibt die zumindest eine Lichtquelle Licht einer vorgegebenen Wellenlänge ab. Der Verschluss ist dabei als schmalbandig durchlässiges Filterelement ausgebildet, welches nur die Wellenlängenbereiche durchlässt, die von der zumindest einen Lichtquelle abgegeben werden. Durch das schmalbandig durchlässige Blendschutzelement wird zwar das von der Lichtquelle bzw. den Lichtquellen erzeugte Licht durchgelassen, der größte Teil des breitbandigen Sonnenlichts wird hingegen unterdrückt. Auch andere Störlichtquellen sind im allgemeinen breitbandig oder haben keinen oder nur geringen Überlapp mit den von den Lichtquellen abgegebenen Wellenlängenbereichen und werden somit überwiegend unterdrückt. Gemäß einem Aspekt der Erfindung ist das Gerät ein Head-Up-Display, ein Projektionssystem oder ein Anzeigesystem mit nicht-scannender Bilderzeugung, bei der das Bild als Ganzes generiert wird. Die erfindungsgemäße Lösung lässt sich außer auf klassische Head-Up-Displays oder Head-Up-Displays, die Lichtwellenleiter verwenden, auch auf andere Anzeige- oder Projektionssysteme anwenden, die eine nicht-sequentielle Bilderzeugung aufweisen und ein hohes Potential für störende Lichtreflexe haben. Dies sind beispielsweise auf DMD-Technologie beruhende Systeme. Die erfindungsgemäße Lösung lässt sich ebenfalls anwenden auf reflexionssensitive Anzeigesysteme, bei denen dann ein Verschluss mit der die Hintergrundbeleuchtung dimmenden Puls-Breiten-Modulation synchronisiert ist.

Vorzugsweise wird ein erfindungsgemäßes Gerät in einem Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: zeigt einen Lichtwellenleiter mit zweidimensionaler Vergrößerung;
- Fig. 3: zeigt schematisch ein Head-Up-Display mit Lichtwellenleiter;
- Fig. 4: zeigt schematisch ein Head-Up-Display mit Lichtwellenleiter in einem Kraftfahrzeug;
- Fig. 5: zeigt schematisch ein erfindungsgemäßes Gerät zum Generieren eines virtuellen Bildes;
- Fig. 6: zeigt schematisch ein aktives Blendschutzelement; und
- Fig. 7: zeigt schematisch ein passives Blendschutzelement.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

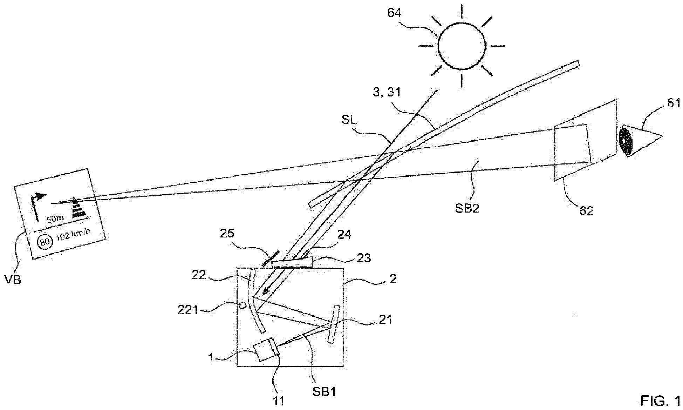

Zunächst soll anhand der Figuren 1 bis 4 der Grundgedanke eines Head-Up-Displays mit Lichtwellenleiter dargelegt werden.

Fig. 1 zeigt eine Prinzipskizze eines Head-Up-Displays gemäß dem Stand der Technik für ein Kraftfahrzeug. Das Head-Up-Display weist einen Bildgenerator 1, eine Optikeinheit 2 und eine Spiegeleinheit 3 auf. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 dient zum einen dazu, den Strahlengang aufzubereiten und somit für ein größeres Bild und eine größere Eyebox 62 zu sorgen. Zum anderen gleicht die Krümmung eine Krümmung der Windschutzscheibe 31 aus, sodass das virtuelle Bild VB einer vergrößerten Wiedergabe des vom Anzeigeelement 11 dargestellten Bildes entspricht. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie 24 oder eine Beschichtung, die einfallendes Sonnenlicht SL daran hindern soll, über die Spiegel 21, 22 auf das Anzeigeelement 11 zu gelangen. Dieses könnte sonst durch eine dabei auftretende Wärmeentwicklung vorübergehend oder auch dauerhaft geschädigt werden. Um dies zu verhindern, wird beispielsweise ein Infrarotanteil des Sonnenlichts SL mittels der optischen Folie 24 ausgefiltert. Ein Blendschutz 25 dient dazu, von vorne einfallendes Licht abzuschatten, sodass es nicht von der Abdeckung 23 in Richtung Windschutzscheibe 31 reflektiert wird, was eine Blendung des Betrachters hervorrufen könnte. Außer dem Sonnenlicht SL kann auch das Licht einer anderen Störlichtquelle 64 auf das Anzeigeelement 11 gelangen.

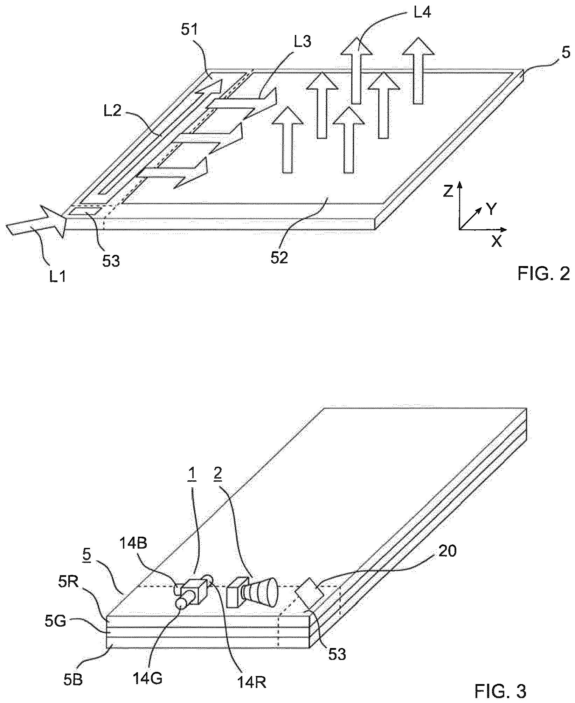

Fig. 2 zeigt in schematischer räumlicher Darstellung einen Lichtwellenleiter 5 mit zweidimensionaler Vergrößerung. Im unteren linken Bereich erkennt man ein Einkoppelhologramm 53, mittels dessen von einer nicht dargestellten bildgebenden Einheit kommendes Licht L1 in den Lichtwellenleiter 5 eingekoppelt wird. In diesem breitet es sich in der Zeichnung nach rechts oben aus, entsprechend dem Pfeil L2 . In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X-Richtung, sodass das ursprüngliche einfallende Lichtbündel L1 als in zwei Dimensionen vergrößertes Lichtbündel L4 den Lichtwellenleiter 5 verlässt.

Fig. 3 zeigt in räumlicher Darstellung ein Head-Up-Display mit drei Lichtwellenleitern 5R, 5G, 5B, die übereinanderliegend angeordnet sind und für je eine Elementarfarbe Rot, Grün und Blau stehen. Sie bilden gemeinsam den Lichtwellenleiter 5. Die in dem Lichtwellenleiter 5 vorhandenen Hologramme 51, 52, 53 sind wellenlängenabhängig, sodass jeweils ein Lichtwellenleiter 5R, 5G, 5B für eine der Elementarfarben verwendet wird. Oberhalb des Lichtwellenleiters 5 sind ein Bildgenerator 1 und eine Optikeinheit 2 dargestellt. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, dass die gesamte dargestellte Einheit eine im Vergleich zu ihrer lichtabstrahlenden Fläche geringe Gesamtbauhöhe aufweist.

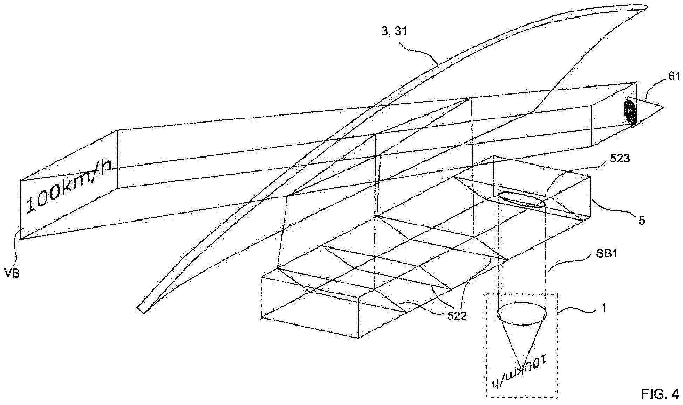

Fig. 4 zeigt ein Head-Up-Display in einem Kraftfahrzeug ähnlich zu Fig. 1, hier allerdings in räumlicher Darstellung und mit einem Lichtwellenleiter 5. Man erkennt den schematisch angedeuteten Bildgenerator 1, der ein paralleles Strahlenbündel SB1 erzeugt, welches mittels der Spiegelebene 523 in den Lichtwellenleiter 5 eingekoppelt wird. Die Optikeinheit ist der Einfachheit halber nicht dargestellt. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert. Der Betrachter sieht ein virtuelles Bild VB über der Motorhaube bzw. in noch weiterer Entfernung vor dem Kraftfahrzeug.

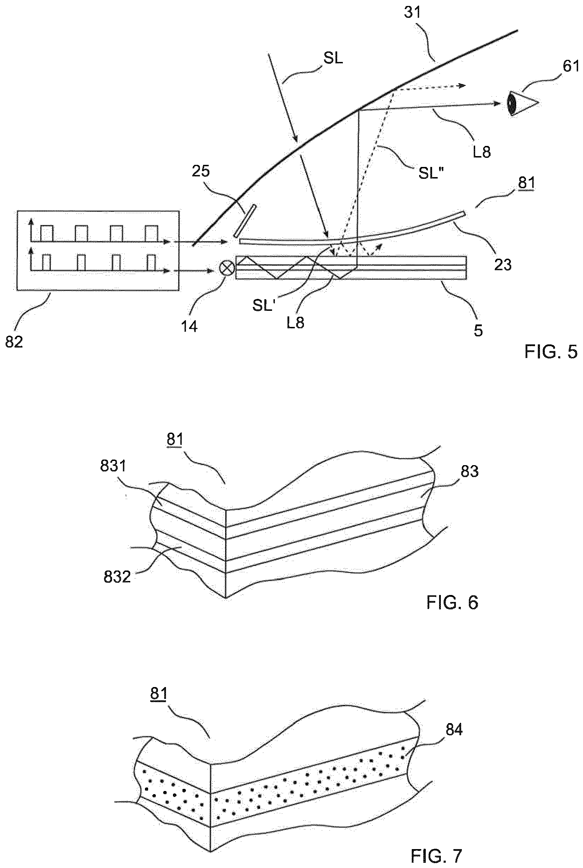

Fig. 5 zeigt ein erfindungsgemäßes Gerät in schematischer Darstellung. Man erkennt die Lichtquelle 14, den Lichtwellenleiter 5, die als Blendschutzelement 81 dienende Abdeckung 23, den als Lichtfalle dienenden Blendschutz 25, die Windschutzscheibe 31 und das Auge 61 des Nutzers. In diesem Beispiel ist das Blendschutzelement in eine herkömmliche, dem Blendschutz dienenden Abdeckung integriert.

Eine Ansteuereinheit 82 gibt Pulse an das Blendschutzelement 81 und an die Lichtquelle 14 ab. Das Blendschutzelement 81 ist somit genau dann durchlässig, wenn zur Erzeugung des virtuellen Bildes VB benötigtes Licht L8 das Blendschutzelement 81 erreicht und dieses passiert. Von außen einfallendes Sonnenlicht SL kann das Blendschutzelement 81 nur dann passieren, wenn dieses durchlässig geschaltet ist. Das durchgelassene Sonnenlicht SL' ist gestrichelt dargestellt, da es nicht kontinuierlich, sondern in von der Verschlusszeit abhängigen Pulsen verläuft. Von diesen kann auch nur ein Teil SL" das Blendschutzelement 81 passieren während dieses durchlässig geschaltet ist. Ein größerer Teil wird am Blendschutzelement 81 entweder reflektiert oder absorbiert, während dieses auf undurchlässig geschaltet ist.

Fig. 5 zeigt auch, wie der Einfall von Sonnenlicht auf den Lichtwellenleiter vom Blendschutzelement reduziert wird. Das Blendschutzelement ist genau dann durchlässig, wenn zur Erzeugung des virtuellen Bildes benötigtes Licht das Blendschutzelement erreicht und dieses passiert. Von außen einfallendes Sonnenlicht kann das Blendschutzelement nur dann passieren, wenn dieses durchlässig geschaltet ist. Das durchgelassene Sonnenlicht ist gestrichelt dargestellt, da es nicht kontinuierlich, sondern in von der Verschlusszeit abhängigen Pulsen verläuft.

Fig. 6 zeigt in Form einer Ausschnittsvergrößerung in räumlich angedeuteter Darstellung ein aktives Blendschutzelement 81. Das Blendschutzelement 81 weist eine Flüssigkristallschicht 83 auf, die von einer oberen Ansteuerelektrode 831 und einer unteren Ansteuerelektrode 832 geschaltet wird. In Verbindung mit gekreuzten Polarisatoren kann auf diese Weise kostengünstig eine Verschlussfunktion realisiert werden.

Eine erste Alternative zur schaltbaren Flüssigkristallschicht 83 ist beispielsweise die Verwendung einer Kerr-Zelle, die den elektrooptischen Kerr-Effekt nutzt. Eine weitere Alternative stellt die Verwendung einer Pockels-Zelle dar, die den Pockels-Effekt nutzt.

Fig. 7 zeigt in Form einer Ausschnittsvergrößerung in räumlich angedeuteter Darstellung ein nicht erfindungsgemässes passives Blendschutzelement 81. Das Blendschutzelement 81 weist eine sättigbare Absorberschicht 84 auf. Beispielsweise kann die sättigbare Absorberschicht 84 durch einen dotierten Kristall gebildet werden. Ein solcher dotierter Kristall wird z.B. beschrieben in M. Demesh et al.: "Passively Q-switched Pr:YLF laser with a Co2+:MgAl2O4 saturable absorber", Opt. Lett. Vol. 42 (2017), Seiten 4687-4690. Das stark konzentrierte von der Lichtquelle kommende Licht lässt den Absorber in Sättigung gehen und passiert ihn daher zum größten Teil oder nahezu vollständig. Von außen kommendes Störlicht, beispielsweise von Scheinwerfern anderer Fahrzeuge, von der Straßenbeleuchtung oder auch von der Sonne, ist nicht konzentriert genug um den Absorber in Sättigung zu bringen. Es wird daher von diesem vollständig oder zumindest zum größten Teil absorbiert und gelangt somit nicht in das Auge des Nutzers.

Bei einer alternativen Ausführungsform eines nicht erfindungsgemässen passiven Blendschutzelements 81 ist das Blendschutzelement 81 als schmalbandig durchlässiges Filterelement ausgebildet. Dieses lässt nur die Wellenlängenbereiche durch, die von der zumindest einen Lichtquelle abgegeben werden. Ein solches schmalbandig durchlässiges Filterelement lässt sich beispielsweise erreichen, indem auf einen Träger eine geeignete Anordnung dielektrischer Schichten aufgebracht wird. Durch das schmalbandig durchlässige Blendschutzelement wird zwar das von der Lichtquelle bzw. den Lichtquellen erzeugte Licht durchgelassen, der größte Teil des breitbandigen Sonnenlichts wird hingegen unterdrückt. Auch andere Störlichtquellen sind im allgemeinen breitbandig oder haben keinen oder nur geringen Überlapp mit den von den Lichtquellen abgegebenen Wellenlängenbereichen und werden somit überwiegend unterdrückt.

### Bezugszeichenliste

- 1: Bildgenerator
- 10: Bildebene
- 101: Bereich der Bildebene
- 11: Anzeigeelement
- 121: Strahlteiler
- 122: Spiegel
- 123: Spiegelebene
- 13, 131: Diffusor
- 14, 14R, 14G, 14B: Lichtquelle

- 2: Optikeinheit
- 20: Spiegel
- 21: Faltspiegel
- 22: Gekrümmter Spiegel
- 221: Lagerung
- 23: Transparente Abdeckung
- 24: Optische Folie
- 25: Blendschutz

- 3: Spiegeleinheit
- 31: Windschutzscheibe

- 5: Lichtwellenleiter
- 51: Falthologramm
- 510: Erster Lichtwellenleiter (in Y-Richtung aufweitend)
- 52: Auskoppelhologramm
- 520: Zweiter Lichtwellenleiter (in X-Richtung aufweitend)
- 522: Spiegelebene
- 523: Spiegelebene
- 53: Einkoppelhologramm
- 61: Auge
- 62: Eyebox
- 63: Betrachtungsebene
- 64: Störlichtquelle

- 81: Blendschutzelement
- 82: Ansteuereinheit
- 83: Flüssigkristallschicht
- 831: Obere Ansteuerelektrode
- 832: Untere Ansteuerelektrode
- 84: Sättigbarer Absorber

- L1...L8: Licht
- SB1, SB2: Strahlenbündel
- SL, SL',: Sonnenlicht
- SL" VB: Virtuelles Bild

## Patentansprüche

1. Gerät zum Generieren eines virtuellen Bildes (VB), mit:
- zumindest einer der Bilderzeugung dienenden Lichtquelle (14, 14R, 14G, 14B) ;
- einem Anzeigeelement (11) zum Erzeugen eines Bildes;
- einem Blendschutzelement (81), das als Verschluss ausgebildet ist, der zwischen einem für Licht durchlässigen und einem für Licht undurchlässigen Zustand schaltbar ist; und
- einer Ansteuereinheit (82), die eingerichtet ist, die zumindest eine Lichtquelle (14, 14R, 14G, 14B) gepulst anzusteuern,
wobei der Verschluss steuerbar ist und die Ansteuerung des Verschlusses mit der Ansteuerung der zumindest einen Lichtquelle (14, 14R, 14G, 14B) synchronisiert erfolgt, und wobei der Verschluss derart angesteuert wird, dass Störlicht (SL), das in das Gerät eintritt, während sich der Verschluss in einem geöffneten Zustand befindet, nach einer Reflexion im Gerät zu einem Zeitpunkt auf den Verschluss trifft, zu dem sich der Verschluss in einem geschlossenen Zustand befindet.

2. Gerät gemäß Anspruch 1, wobei das Gerät einen Lichtwellenleiter (5, 510, 520) zum Aufweiten einer Austrittspupille aufweist.

3. Gerät gemäß Anspruch 2, wobei das Blendschutzelement (81) eingerichtet ist, den Einfall von Störlicht (SL) auf den Lichtwellenleiter (5,510,520) zu reduzieren.

4. Gerät gemäß Anspruch 1, 2 oder 3, wobei das Blendschutzelement (81) eine schaltbare Flüssigkristallschicht (83), eine Kerr-Zelle oder eine Pockels-Zelle aufweist.

5. Gerät gemäß einem der vorherigen Ansprüche, wobei das Gerät ein Head-Up-Display, ein Projektionssystem oder ein Anzeigesystem mit nicht-sequentieller Bilderzeugung ist.

6. Fahrzeug mit einem Gerät gemäß einem der Ansprüche 1 bis 5 zum Generieren eines virtuellen Bildes (VB) für einen Fahrer des Fahrzeugs.

## Claims

1. Device for generating a virtual image (VB), having:
- at least one light source (14, 14R, 14G, 14B) which is used for the image generation;
- a display element (11) for generating an image;
- a glare protection element (81) which is in the form of a closure that is switchable between a light-transmissive state and a light-opaque state; and
- a control unit (82) which is configured to drive the at least one light source (14, 14R, 14G, 14B) in pulsed fashion,
wherein the closure is controllable and the driving of the closure and the driving of the at least one light source (14, 14R, 14G, 14B) are synchronized, and wherein the closure is driven so that stray light (SL) which enters the device while the closure is in an open state strikes the closure, following a reflection in the device, at a time at which the closure is in a closed state.

2. Device according to Claim 1, wherein the device has an optical waveguide (5, 510, 520) for widening an exit pupil.

3. Device according to Claim 2, wherein the glare protection element (81) is configured to reduce the incidence of stray light (SL) on the optical waveguide (5, 510, 520).

4. Device according to Claim 1, 2 or 3, wherein the glare protection element (81) has a switchable liquid crystal layer (83), a Kerr cell or a Pockels cell.

5. Device according to any of the preceding claims, wherein the device is a head-up display, a projection system or a display system with non-sequential image generation.

6. Vehicle having a device according to any of Claims 1 to 5 for generating a virtual image (VB) for a driver of the vehicle.

## Revendications

1. Appareil de génération d'images virtuelles (VB), ledit appareil comprenant :
- au moins une source de lumière (14, 14R, 14G, 14B) servant à la génération d'images ;
- un élément d'affichage (11) destiné à générer une image ;
- un élément anti-éblouissement (81) qui est conçu comme un obturateur et qui peut être commuté entre un état de transmission de lumière et un état d'occultation de lumière ; et
- une unité de commande (82) qui est conçue pour commander l'au moins une source de lumière (14, 14R, 14G, 14B) de manière pulsée,
l'obturateur pouvant être commandé et l'activation de l'obturateur étant synchronisée avec l'activation de l'au moins une source de lumière (14, 14R, 14G, 14B), et
l'obturateur étant activé de manière que la lumière parasite (SL) entrant dans l'appareil, pendant que l'obturateur est dans un état ouvert, soit incidente à l'obturateur après réflexion dans l'appareil à un instant où l'obturateur est dans un état fermé.

2. Appareil selon la revendication 1, l'appareil comportant un guide d'ondes lumineuses (5, 510, 520) destiné à dilater une pupille de sortie.

3. Appareil selon la revendication 2, l'élément anti-éblouissement (81) étant conçu pour réduire l'incidence de la lumière parasite (SL) sur le guide d'ondes lumineuses (5, 510, 520).

4. Appareil selon la revendication 1, 2 ou 3, l'élément anti-éblouissement (81) comportant une couche de cristaux liquides commutable (83), une cellule de Kerr ou une cellule de Pockels.

5. Appareil selon l'une des revendications précédentes, l'appareil étant un dispositif d'affichage tête haute, un système de projection ou un système d'affichage à génération d'images non séquentielle.

6. Véhicule comprenant un appareil selon l'une des revendications 1 à 5 destiné à générer une image virtuelle (VB) pour un conducteur du véhicule.
